# EUROPÄISCHE PATENTSCHRIFT

(11) **EP 0 491 027 B1**
(45) Veröffentlichungstag und Bekanntmachung des Hinweises auf die Patenterteilung: **04.12.1996**
(21) Anmeldenummer: 91912707.6
(22) Anmeldetag: 03.07.1991
(51) Int. Cl.: F16K 17/30

(54) **SICHERHEITSSCHLIESSVORRICHTUNG**
SAFETY CUT-OUT
DISPOSITIF D'OBTURATION DE SECURITE

(30) Priorität: 06.07.1990 AT 1442/90; 21.12.1990 AT 2620/90
(43) Veröffentlichungstag der Anmeldung: 24.06.1992
(73) Patentinhaber: PIPELIFE ROHRSYSTEME GESELLSCHAFT m.b.H., 3500 Krems (AT)
(72) Erfinder: MASLOFF, Peter, A-7061 Trausdorf (AT)
(74) Vertreter: Haffner, Thomas M., Dr.
(86) Internationale Anmeldenummer: AT9100082
(87) Internationale Veröffentlichungsnummer: WO9201184

(56) Entgegenhaltungen:
- DE-B- 1 020 504
- FR-A- 1 398 966
- FR-A- 1 603 246
- US-A- 2 926 690
- US-A- 3 794 077
- US-A- 4 934 405

## Beschreibung

Die Erfindung bezieht sich auf eine Sicherheitsschließvorrichtung für Gasrohrleitungen mit einem Ventil, welches gegen einen Ventilsitz in einem insbesondere rohrförmigen Gehäuse preßbar ist, wobei das Ventil als in Achsrichtung des rohrförmigen Gehäuses verschiebliches Tellerventil entgegen der Kraft einer Feder verschieblich gelagert ist, wobei die Querschnittsfläche des Ventiltellers kleiner als der lichte Querschnitt des Gehäuses ausgebildet ist und in Abstand von der Innenwand des rohrförmigen Gehäuses gehalten ist und an der der Feder abgewandten Seite des Ventiltellers der Gaszuleitungsanschluß vorgesehen ist.

Für Wasserleitungsverrohrungen sind bereits Einrichtungen bekannt geworden, welche zwischen einem Entnahmehahn und einem mit einem Schlauch angeschlossenen Verbraucher angeordnet werden und sicherstellen sollen, daß bei einem Platzen des angeschlossenen Schlauches keine Übermenge an Wasser austreten kann. Derartige Wassersperrventile berücksichtigen den Umstand, daß bei einem Platzen eines Schlauches der Druck rasch abfällt und gleichzeitig eine größere als die üblicherweise benötigte Wassermenge entnommen wird. Es wird somit bei einem plötzlichen Druckabfall sichergestellt, daß nur eine bestimmte, maximale Flüssigkeitsmenge austritt, worauf das Sicherheitsventil schließt. Mit derartigen Einrichtungen ist es beispielsweise möglich, Haushaltsmaschinen, wie beispielsweise Waschmaschinen, Geschirrspülmaschinen od.dgl., welche üblicherweise über flexible Schläuche angeschlossen werden, abzusichern.

Bei Gasverrohrungen kommt es im Zuge von Straßenbauarbeiten oder aber auch im Zuge von Bauarbeiten an Gebäuden häufig zu einem unbeabsichtigten Beschädigen des Rohrleitungssystemes. In solchen Fällen kann es zu einem unbeabsichtigten Austreten von Gas und somit zu einer Explosionsgefahr kommen. Auch in Gasleitungssystemen sind Verbraucher, wie beispielsweise Heizungsanlagen angeschlossen, welche bis zum Erreichen der Solltemperatur für die Brenner Gas aus dem Leitungsnetz beziehen sollen. Eine Überwachung derartiger Gasleitungen über einen Gaszähler ist insofern nicht zielführend, da in Abhängigkeit von der Außentemperatur Heizungsanlagen bei tieferen Temperaturen über einen längeren Zeitraum und damit insgesamt mit einer größeren Gasmenge versorgt werden müssen als bei höheren Außentemperaturen. Bei einem Bruch bzw. einer Zerstörung des Rohrleitungssystems tritt aber auch hier verbraucherseitig ein Druckabfall auf.

Eine Sicherheitsschließvorrichtung der eingangs genannten Art ist beispielsweise der DE-PS 26 03 408 entnehmbar. Bei dieser bekannten Ausbildung wird darauf abgezielt, ein Sicherheitsventil derart auszubilden, daß der radiale Platzbedarf gering ist und daß die Öffnungsbewegung des Ventilschließkörpers im Hinblick auf rasch wechselnde Druckverhältnisse in der Leitung gedämpft wird.

Aus der DE-OS 35 18 430 ist ein Durchgangsventil zum automatischen Verschließen im Falle des Ausströmens eines Gases bekanntgeworden, wobei ein Elektromagnet zur Betätigung des Ventilschaftes vorgesehen ist.

Der US-PS 35 83 435 ist ein Leckdetektor für Fluidsysteme zu entnehmen, wobei bei Auftreten eines Lecks in der zu überprüfenden Leitung, in welcher der Leckdetektor eingebaut ist, eine Verschiebung eines Ventilschaftes erfolgt und das Auftreten eines Lecks durch eine entsprechende Anzeige, wie beispielsweise das Auftreten von Luftblasen in einem Flüssigkeitsvorrat, erfolgt.

Ein rohrförmiges Sicherheitsventil, das bei Störungen automatisch schließt, und dessen Betriebsbereitschaft manuell wiederherstellbar ist, ist der US-A-2 926 690 zu entnehmen. Bei Druckunterschieden zwischen Ein- und Ausgang des Ventiles wird hierbei ein axial beweglicher Ventilteller durch Federwirkung auf einen Ventilsitz angedrückt und sperrt somit den Durchfluß. Gleichzeitig sorgt ein Verriegelungsmechanismus für den Verbleib des Ventiltellers in der Schließstellung.

Die Erfindung zielt nun darauf ab, eine Sicherheitsschließvorrichtung der eingangs genannten Art für Gasrohrleitungen zu schaffen, welche es ermöglicht, Beschädigungen im Rohrleitungssystem zu erkennen, ohne ein vorzeitiges Verschließen der Gasleitungen zu bewirken, wenn Verbraucher über einen längeren Zeitraum die ihrer Leistung entsprechende Gasmenge benötigen. Die erfindungsgemäße Sicherheitsschließvorrichtung soll insbesondere zur Absicherung von Mehrfamilienhäusern geeignet sein, bei welchen eine größere Anzahl von Verbrauchern zu unregelmäßigen Zeitpunkten Gas aus dem Gasrohrleitungsnetz bezieht. Zur Lösung der eingangs genannten Aufgabe besteht die erfindungsgemäße Sicherheitsschließvorrichtung darin, daß die Querschnittsfläche des Durchtrittsquerschnittes im an den Ventilsitz anschließenden Bereich stetig zunimmt. Da ein entgegen der Kraft einer Feder verschieblich gelagertes Tellerventil vorgesehen ist, wird bei entsprechender Einstellung der Federvorspannung bzw. der Federkraft ein bestimmter Differenzdruck vorgegeben, welcher für Schäden im nachfolgenden Leitungssystem charakteristisch ist. Sobald der Druck im nachfolgenden Leitungssystem kurzfristig unter einen Grenzwert abfällt, schließt die erfindungsgemäße Sicherheitsschließvorrichtung und da lediglich mechanische Teile für die Sicherheitsschließvorrichtung vorgesehen sind, bleibt eine derartige Sicherheitsschließvorrichtung auch bei Naturkatastrophen, wie beispielsweise Erdbeben, betriebsfähig. Durch die erfindungsgemäße Konstruktion gelingt es, die Auswirkungen des bei höherem Verbrauch auftretenden Druckabfalles, welcher durch die Mindestabmessungen eines Ventilschaftes sowie seiner Lagerung in Strömungsrichtung durch die bewirkte Drosselwirkung zwangsläufig hervorgerufen wird, auf die Ansprechsicherheit der Schließvorrichtung zu minimieren. Insgesamt ist es mit der erfindungsgemäßen Vorrichtung möglich, nach der durch den Ventilsitz definierten Drosselstelle den Druck nahezu auf sein ursprüngliches Niveau zurückzuführen, sodaß der durch die Drossel verursachte Druckverlust besonders klein gehalten werden kann. Weiters kann hiebei in Kombination mit einer bevorzugten Maßnahme, das Gleitlager von in axialer Richtung verlaufenden Stegen zu bilden, auch eine weitestgehend laminare Strömung aufrecht erhalten werden, wodurch Beeinträchtigungen der Sicherheitsschließvorrichtung durch Turbulenzen im Anschluß an den Ventilsitz weitestgehend ausgeschaltet werden. Die Ausbildung kann hiezu bevorzugt so getroffen sein, daß die Erzeugenden des sich konisch erweiternden Bereiches mit der Achse einen Winkel (β) von 3° bis 10°, vorzugsweise 5°, einschließen.

Die für die Vermeidung von Turbulenzen erforderliche Mindestgeschwindigkeit muß dabei im wesentlichen nur im unmittelbaren Bereich der Sitzfläche über eine kurze Wegstrecke erzielbar sein und es ist, gemäß einer bevorzugten Ausführungsform, die Ausbildung so getroffen, daß an die Sitzflächen des Ventiltellers an der der Gaszuleitung abgewandten Seite ein einen sich konisch erweiternden Querschnitt definierender abgesetzter Bereich am Ventilteller anschließt, um den durch die Drosselstelle bewirkten Druckabfall möglichst gering zu halten.

Alternative Systeme, die ferngesteuerte Ventile erfordern, welche beispielsweise in Abhängigkeit von Signalen eines Gas-detektors betätigt werden, sind auf ein funktionsfähiges elektrisches Leitungssystem angewiesen und in der Regel spätestens dann unbrauchbar, wenn gleichzeitig elektrische Leitungen zerstört werden oder die Stromversorgung zusammenbricht. Demgegenüber zeichnet sich die erfindungsgemäß getroffene Konstruktion dadurch aus, daß sie autonom auch in Katastrophenfällen einsatzfähig bleibt. Die erfindungsgemäße Sicherheitsschließvorrichtung kann dabei unmittelbar im Bereich der Abzweigung einer Hauszuleitung an das Hauptnetz und/oder an Verzweigungspunkten im Hauptnetz in sämtlichen Rohrsträngen vorgesehen sein, sodaß ein etwaiger Gasaustritt auf ein Minimum beschränkt wird.

Für die sichere Funktion eines derartig lediglich auf die Druckdifferenz im Leitungssystem vor und nach dem Ventil ansprechenden Sicherheitsventiles ist es hiebei erforderlich, im Bereich des Ventiltellers einen Mindestabstand vom Gehäuse einzuhalten, welcher den freien Durchtrittsquerschnitt für das Gas definiert. Die nachfolgenden Lagerbauteile müssen so angeordnet sein, daß hinter dem Ventilsitz im Bereich des Sicherheitsventiles keine nennenswerte Drosselung eintritt, um ein rasches Ansprechen auf einen unzulässigen Druckabfall zu gewährleisten. Da das Tellerventil entgegen der Kraft einer Feder schließt und an der der Feder abgewandten Seite des Ventiltellers der Gaszuleitungsanschluß vorgesehen ist, läßt sich nach einem unzulässigen Druckabfall und einem Schließen des Ventiles die neuerliche Betriebslage des Ventiltellers durch Einbringen eines Gegendruckes in das Verbraucherleitungsnetz wiederum herstellen, so daß für die neuerliche Inbetriebnahme keine weiteren, zusätzlichen Absperrmaßnahmen im Gasrohrleitungsnetz erforderlich werden. Das Ventil kann daher auch an relativ unzugänglicher Stelle angeordnet werden und beispielsweise unmittelbar im Anschluß eines Hausanschlusses an eine Hauptleitung angeordnet werden. Der Einsatz der erfindungsgemäßen Sicherheitsschließvorrichtung kann dabei aufgrund des Ansprechverhaltens auf einen entsprechenden Differenzdruck in Leitungsnetzen mit geregeltem oder ungeregeltem Vordruck eingesetzt werden.

Um die Ansprechempfindlichkeit in keiner Weise zu beeinträchtigen, ist dafür Sorge zu tragen, daß im Anschluß an den Ventilsitz im Inneren der Sicherheitsschließvorrichtung keine weitere Drosselung möglich ist, wozu die Ausbildung so getroffen sein kann, daß das oder die Gleitlager in gelochten Scheiben oder an mit dem Gehäuse verbundenen radialen Streben festgelegt ist (sind). Analoge Überlegungen gelten für den Ventilsitz, wobei hier mit Vorteil die Ausbildung so getroffen ist, daß der Ventilsitz als Ringscheibe mit annähernd konischen Sitzflächen ausgebildet ist und daß mit der Ringscheibe ein zentrales Gleitlager für den Ventilschaft unter Freilassen eines Gasdurchtrittsquerschnittes verbunden ist.

Um eine sichere dichtende Anlage des Ventiltellers am Ventilsitz zu gewährleisten, kann die Ausbildung mit Vorzug so getroffen sein, daß der Ventilsitz und/oder die mit dem Ventilsitz zusammenwirkende Sitzfläche des Ventiltellers gekrümmte Erzeugende aufweist.

Um den jeweils maximal zulässigen Differenzdruck an die Art, Natur und Menge der Verbraucher exakt anpassen zu können, ist mit Vorteil die Ausbildung so getroffen, daß die Federkraft der Feder und/oder der Schließweg des Ventils einstellbar ist. Gemäß einer bevorzugten Ausführungsform ist die Ausbildung so getroffen, daß die Feder zur Beaufschlagung des Ventiltellers mit progressiver Federkennlinie ausgebildet ist. Durch die Ausbildung der Feder mit einer progressiven Federkennlinie kann die Ansprechempfindlichkeit derart gewählt werden, daß bei Überschreiten einer auf einen Schaden hinweisenden Druckdifferenz über einen ersten Federweg eine relativ rasche Schließbewegung erfolgt, wodurch der Durchströmquerschnitt im Bereich des Ventiltellers verringert wird und derart die Druckdifferenz rasch weiter erhöht wird, so daß es zu einer sicheren Schließbewegung der erfindungsgemäßen Sicherheitsschließvorrichtung kommt.

Um Turbulenzen der Gasströmung im Bereich der Sicherheitsschließvorrichtung und insbesondere im Bereich des Ventiltellers möglichst gering zu halten, ist die Ausbildung mit Vorzug so getroffen, daß die der Feder abgewandte Stirnfläche des Ventiltellers Leitflächen, insbesondere konvex gekrümmte Leitflächen, aufweist. Durch derartige Leitflächen, beispielsweise in Form einer einer Flugzeugnase entsprechenden Haube, wird eine weitestgehend laminare Strömung auch im Bereich des Ventiltellers aufrechterhalten und es werden durch Turbulenzen hervorgerufene Sogwirkungen, welche einerseits zu einer instabilen Lage des Ventiltellers und andererseits zu einer Beeinflussung der die Sicherheitsschließvorrichtung auslösenden Druckdifferenz führen können, weitestgehend ausgeschlossen. Neben einer derartigen strömungsgünstigen Ausbildung der der Feder abgewandten Stirnfläche des Ventiltellers ist für eine weitere Verbesserung der Strömungseigenschaften insbesondere in bezug auf eine Vermeidung von Turbulenzen im Bereich des Ventiltellers die Ausbildung vorzugsweise so getroffen, daß der dem Ventilsitz benachbarte Bereich des Ventilschaftes unmittelbar an den Ventilsitzflächen des Ventiltellers ansetzt und kontinuierlich zum Ventilschaftdurchmesser abnimmt.

Für die sichere Betriebsweise von Gaszählern und auf Grund der Tatsache, daß eine absolute Dichtheit nahezu nicht erzielbar ist, ist in einschlägigen Vorschriften vorgesehen, daß eine gewisse Leckgasmenge bei Gasverbrauchern toleriert wird, welche beispielsweise bei 30 l/h liegt. Wie oben ausgeführt, wird nach einem Auslösen der erfindungsgemäßen Sicherheitsschließvorrichtung auf Grund einer Beschädigung einer Leitung bzw. eines überhöhten Gasaustrittes an einem schadhaften Verbraucher nach einer Reparatur der entsprechenden Leitung das Tellerventil dadurch geöffnet, daß verbraucherseitig ein den Druck im Leitungsnetz übersteigender Druck aufgebaut wird, wodurch der Ventilteller vom Ventilsitz abhebt und der Durchtrittsquerschnitt und somit die Rohrleitung wiederum geöffnet wird. Ein derartiges Öffnen durch einen verbraucherseitigen Druckaufbau ist dabei im allgemeinen mit einer entsprechenden Überprüfung der Betreiber des Gasnetzes verbunden und somit zumeist sehr zeitaufwendig. Für den Fall einer irrtümlichen Betätigung eines Öffnungsventiles, wodurch die Sicherheitsschließvorrichtung ausgelöst und somit der Verbraucher vom Netz getrennt würde, kann unter Berücksichtigung der bewilligten Leckgasmengen die Ausbildung bevorzugt so getroffen sein, daß der Ventilteller eine Leckgasbohrung aufweist und/oder die Sitzfläche undicht an den Ventilsitz anpreßbar ist, wobei die Leckgasmenge kleiner als 30 l/h gehalten ist. In diesem Fall wird nach einem Schließen des Verbrauchernetzes innerhalb kurzer Zeit durch die Leckgasbohrung bzw. die undichte Auflage des Ventiltellers am Ventilsitz ein entsprechender Druckaufbau verbraucherseitig erfolgen, sodaß ein Druckausgleich im Bereich des Ventiltellers auftreten wird und durch die Federkraft das Tellerventil wiederum geöffnet werden wird. Die in den entsprechenden Sicherheitsbestimmungen vorgesehene Leckgasmenge liegt dabei weit unter einer Gasmenge, welche bei einem Schadhaftwerden einer Leitung bzw. eines Verbrauchers tatsächlich austreten würde, so daß bei einem selbsttätigen Öffnen der erfindungsgemäßen Sicherheitsschließvorrichtung auf Grund der durchtretenden Leckgasmenge die Dichtheit des verbraucherseitigen Netzes in jedem Fall Voraussetzung ist.

Um auch bei relativ geringen Differenzdrücken, insbesondere bei einer großen Anzahl von nachfolgenden Verbrauchern, eine präzise Ansprechcharakteristik und ein sicheres Schließen der Sicherheitsschließvorrichtung zu gewährleisten, erscheinen eine Reihe von Randbedingungen von wesentlicher Bedeutung. Das über Gasleitungsnetze verteilte Brenngas kann insbesondere in Leitungsnetzen, welche eine große Anzahl älterer Leitungsabschnitte umfassen, eine Reihe von Festkörpern, insbesondere Rost, mit sich führen. Derartige Festkörper machen sich üblicherweise durch vorzeitiges Verlegen von Brennerdüsen bemerkbar. Eine Ablagerung derartiger Festkörper im Bereich der Lagerung des Ventilschaftes kann aber zu erhöhter Lagerreibung oder sogar zu einem Festfressen des Ventilschaftes führen, womit die Funktion der Sicherheitsschließvorrichtung nicht mehr gewährleistet wäre. Um ein derartiges Festsetzen von Feststoffen im Bereich der Lagerung des Ventilschaftes zu verhindern, ist die Ausbildung mit Vorteil so getroffen, daß der Ventilschaft in Längsrichtung desselben verlaufende Rippen bzw. Rillen aufweist. Alternativ kann aber auch das Gleitlager dahingehend verbessert werden, daß das bzw. die Gleitlager für den Ventilschaft von, vorzugsweise drei, radialen Stegen gebildet ist, welche Stege sich in axialer Richtung des Ventilschaftes erstrecken. In beiden Fällen wird die in der Lagerung geführte Fläche verringert und es verbleibt neben den Lagerflächen Raum für das Abstreifen von Verunreinigungen.

Die Ausbildung derartiger Turbulenzen kann aber auch noch dadurch verringert werden, daß der Winkel, den die Erzeugenden der konischen Sitzflächen des Ventilsitzes mit der Achse einschließen, umgekehrt proportional dem Druck in der Gaszuleitung gewählt ist. Insbesondere für die Verwendung in Niederdruckleitungen, d.h. bei Drücken von maximal 1 bar, kann hiebei mit Vorteil mit einem Konuswinkel der Sitzflächen von etwa 45° zur Achse des Ventiles, und in Mitteldruckleitungen, d.h. in Leitungen, deren Druck zwischen 1 und 4 bar liegt, kann mit Vorteil mit einem Sitzflächenkonuswinkel von etwa 30° ein Optimum erzielt werden. Im Bereich des Ventilsitzes muß eine Mindestgeschwindigkeit des durchströmenden Gases aufrecht erhalten werden, um zu verhindern, daß sich Turbulenzen ausbilden, welche die Strömung beeinflussen würden. Bei Einhaltung eines unveränderten Ventilhubes wird dabei durch unterschiedliche Neigung der Sitzflächen eine dem Druck in der Gaszuleitung entsprechende Querschnittsfläche für den Gasdurchtritt definiert, welche als Drosselstelle eine Geschwindigkeitserhöhung der Gasteilchen auf die erforderliche Geschwindigkeit bedingt. Derart können bei höheren Nenndrücken in der Zuleitung einen geringeren Winkel mit der Achse einschließende und somit steilere, d.h. einen größeren Durchtrittsquerschnitt definierende Sitzflächen Verwendung finden, da durch den höheren Nenndruck die Gasgeschwindigkeit sich bereits auf einem höheren Niveau befindet.

Um das Eindringen von Feststoffen, insbesondere Rost, zu vermeiden, kann in konventioneller Weise an der dem Gaszuleitungsanschluß zugewandten Seite des Ventiltellers ein Filter angeordnet sein.

Um die Feder gegen das Ansetzen von im Gas mitgeführten Feststoffteilchen, insbesondere Rost, zu schützen und die Anlage der Feststoffteilchen an der Feder zu verhindern, welche eine Änderung der Federcharakteristik mit sich bringen würden, ist die Ausbildung bevorzugt so getroffen, daß die Feder in einer Ausnehmung im Ventilschaft angeordnet ist und daß das der Gaszuleitung abgewandte Gleitlager von einem an einem Bolzen angeordneten und in den hohlen Ventilschaft eindringenden Federteller gebildet wird. Bei einer derartigen in einer Ausnehmung des Ventilschaftes geführten Feder kann in einfacher Weise eine Dämpfung erreicht werden, wenn der in den hohlen Ventilschaft eintauchende Federteller und/oder Bolzen eine Drosselstelle zwischen der die Feder aufnehmenden Ausnehmung des Ventilschaftes und der Rohrleitung aufweist, wie dies einer bevorzugten Ausführungsform der erfindungsgemäßen Sicherheitsschließvorrichtung entspricht. Dadurch, daß die die Feder aufnehmende Ausnehmung des hohlen Ventilschaftes über eine Drosselstelle mit dem Inneren des Rohres in Verbindung steht, wird im hohlen Ventilschaft ein zusätzlicher Gaspolster aufgebaut, welcher beim Schließen des Ventils die Federkraft unterstützt. Dabei kann durch entsprechende Bemessung der die Drosselstelle bildenden Bohrung die Wirkung des Gaspolsters an die entsprechenden Bedingungen, beispielsweise an den in der Leitung herrschenden Nenndruck, angepaßt werden.

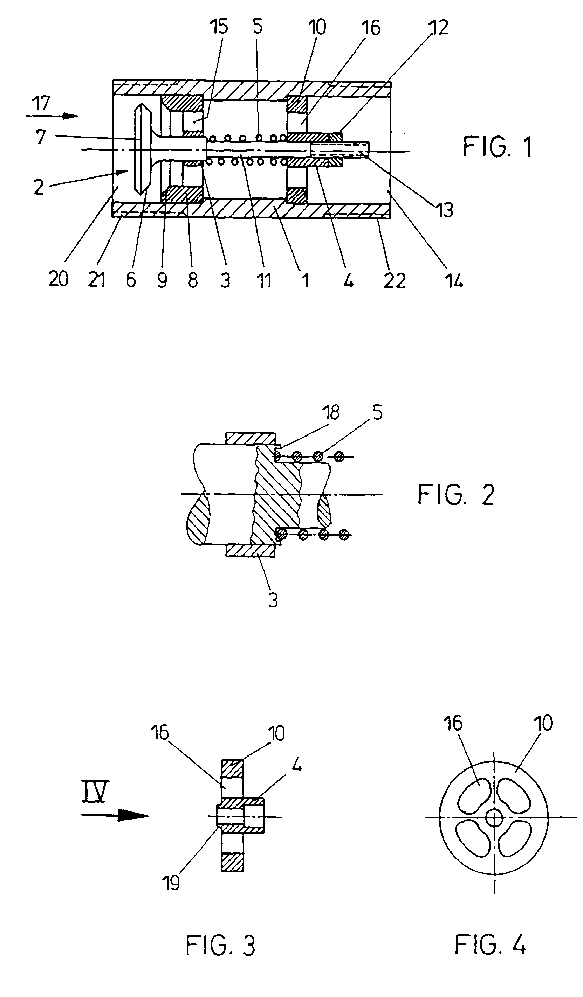

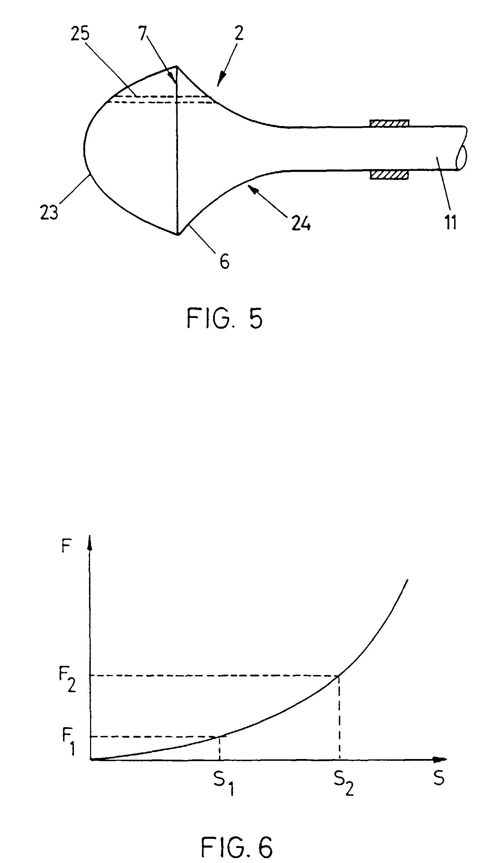

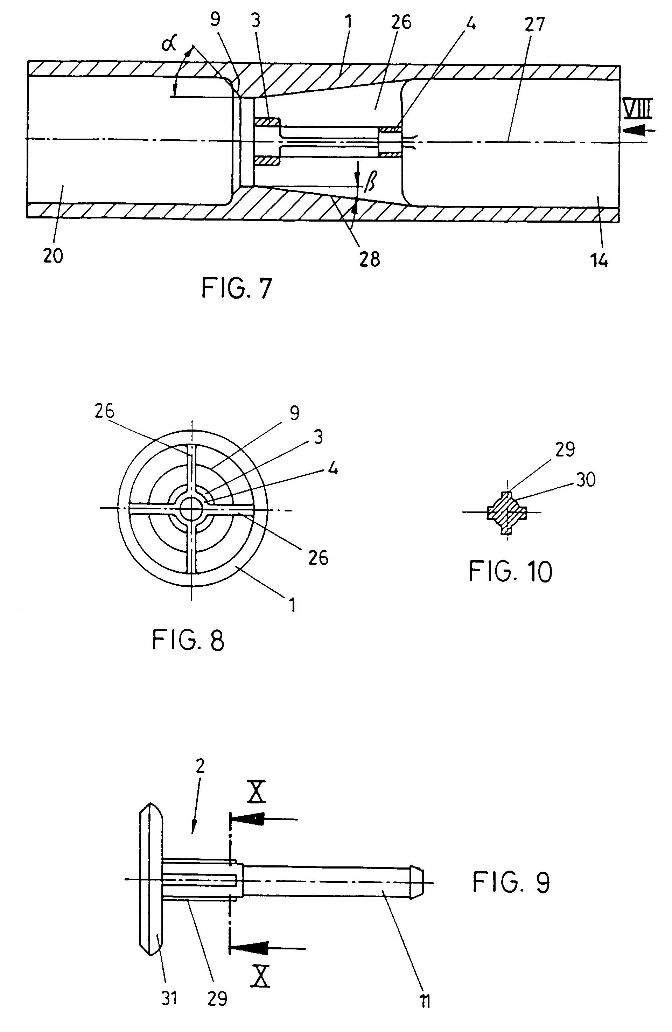

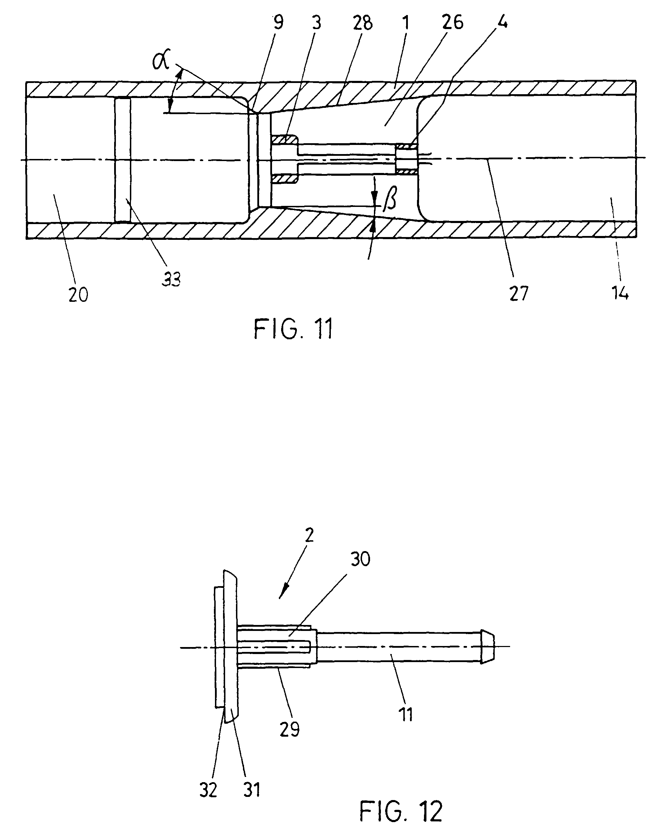

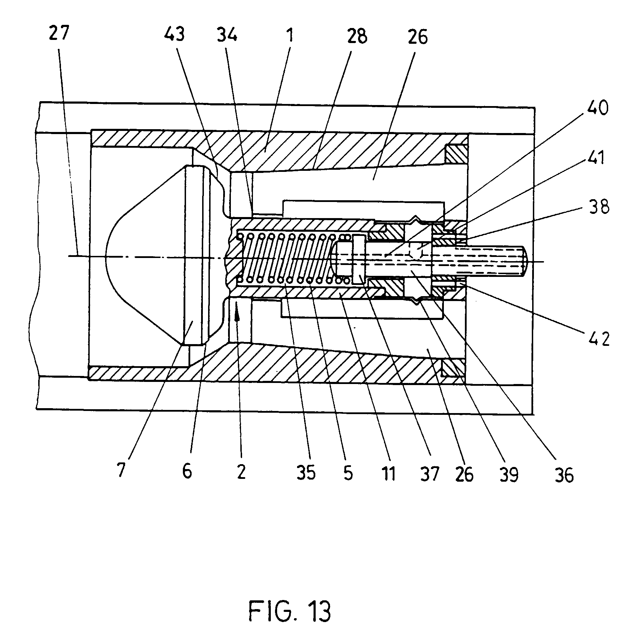

Die erfindungsgemäße Sicherheitschließvorrichtung wird nachfolgend an Hand von in der Zeichnung schematisch dargestellten Ausführungsbeispielen näher erläutert. In dieser zeigen Fig.1 einen Schnitt durch eine erste Ausführungsform einer in einem Rohr angeordneten erfindungsgemäßen Sicherheitsschließvorrichtung, wobei hier die stetige Zunahme der Querschnittsfläche des Durchtrittsquerschnittes im am Ventilsitz anschließenden Bereich nicht berücksichtigt wird, sondern erst in Fig.7 dargestellt ist; Fig.2 in größerem Maßstab eine teilweise Darstellung im Schnitt des Federtellers des Tellerventils der Fig.1; Fig.3 im Detail die Ausbildung des Gleitlagers für das dem Ventilteller abgewandte freie Ende des Ventilschaftes der Fig.1; Fig.4 eine Ansicht in Richtung des Pfeiles IV der Fig.3; Fig.5 eine schematische Darstellung einer abgewandelten Ausführungsform des Ventiltellers für eine erfindungsgemäße Sicherheitsschließvorrichtung; Fig.6 ein Diagramm der Federkennlinie einer mit progressiver Federkennlinie ausgestatteten Feder zur Beaufschlagung des Ventiles; Fig.7 einen Schnitt durch eine abgewandelte Ausführungsform eines rohrförmigen Gehäuses einer erfindungsgemäßen Sicherheitsschließvorrichtung ohne das verschiebliche Tellerventil; Fig.8 eine Ansicht in Richtung des Pfeiles VIII der Fig.7; Fig.9 eine Seitenansicht des in dem in Fig.7 dargestellten Gehäuse verwendbaren Tellerventils in geändertem Maßstab; Fig.10 einen Schnitt nach der Linie X-X der Fig.9 durch einen Teilbereich des Ventilschaftes des in Fig.9 dargestellten Tellerventils; Fig.11 einen Schnitt durch eine weitere abgewandelte Ausführungsform in einer zu Fig.7 ähnlichen Darstellung durch ein Gehäuse einer erfindungsgemäßen Sicherheitsschließvorrichtung, insbesondere für den Einsatz in Mitteldruckleitungen; Fig.12 eine Seitenansicht ähnlich der Fig.9 eines in dem in der Fig.11 dargestellten Gehäuse einsetzbaren Tellerventils; und Fig.13 eine weitere abgewandelte Ausführungsform in einer zu Fig.1 ähnlichen Darstellung.

In Fig.1 ist in einem Leitrohr bzw. Rohrabschnitt 1 ein von einem Tellerventil gebildetes Ventil 2 in Gleitlagern 3 und 4 in axialer Richtung des Rohres 1 und des Ventiles 2 entgegen der Kraft einer Schraubenfeder 5 verschiebbar gelagert. Die Sitzfläche 6 des Ventiltellers 7 wirkt dabei mit einem in einer im Leitrohr 1 festgelegten Ringscheibe 8 ausgebildeten Ventilsitz 9 zusammen, wobei die Ringscheibe 8 gleichzeitig als Lagerung für das Gleitlager 3 dient. Das Gleitlager 3 kann dabei entweder über in radialer Richtung verlaufende Streben 26 bzw. Stege 26 abgestützt sein oder es kann die Ringscheibe 8 mit Ausnehmungen 15 bzw. Durchbrechungen 15 ausgebildet sein, wie dies für die Lagerung bzw. Ringscheibe 10 für das dem Ventilteller 7 abgewandte Ende des Ventilschaftes 11 in Fig.4 näher dargestellt ist. Für eine Verstellung des Schließweges der Ventiles 2 ist am freien Ende des Ventilschaftes 11 eine Mutter 12 vorgesehen, welche auf einem schematisch angedeuteten Gewinde 13 des Ventilschaftes 11 aufschraubbar ist. Für die Einstellung der Federkraft kann im Bereich zwischen den Gleitlagern 3 und 4 eine ähnliche, beispielsweise von einer Mutter 12 gebildete Verstelleinrichtung vorgesehen sein.

Die Querschnittsfläche des Ventiltellers 7 bzw. der Durchtrittsquerschnitt zwischen den Sitzflächen 6 und 9 ist in geöffnetem Zustand des Ventils auf die an der mit 14 bezeichneten Verbraucherseite angeschlossenen Verbraucher abgestimmt. Dabei muß gleichzeitig dafür Sorge getragen werden, daß die Durchbrechungen bzw. Öffnungen 15 und 16 im Bereich der Abstützungen der Gleitlager 3 und 4 im wesentlichen zumindest gleich dem Durchtrittsquerschnitt zwischen den Sitzflächen 6 und 9 im Bereich des Ventiltellers 7 sind, um eine Drosselwirkung nach dem Ventilteller 7 in der mit 17 bezeichneten Strömungsrichtung zu vermeiden. Die Querschnittsfläche des Ventiltellers 7 relativ zum lichten Querschnitt des Rohres 1 sowie die Federkraft ist dabei derart bemessen, daß bei einem Druckabfall, welcher einen Druckabfall, wie er bei Betrieb sämtlicher Verbraucher erzielt wird, übersteigt und somit auf eine Zerstörung des verbraucherseitigen Leitungsabschnittes beispielsweise durch Bauarbeiten hindeutet, ein automatisches Schließen des Ventiles 2 und somit ein Unterbinden einer weiteren Gaszufuhr erfolgt. Bei Anordnung des Ventils im Bereich von Abzweigungen im Hauptnetz wird die zu übersteigende Druckdifferenz auf den maximal möglichen Verbrauch sämtlicher Verbraucher des entsprechenden Leitungsabschnittes abgestimmt.

In Fig.2 ist in größerem Maßstab der Bereich des Ventiles bzw. Ventilschaftes 11 nahe dem, in Strömungsrichtung 17 gesehen, vorderen Gleitlager 3 dargestellt, wobei deutlich ein abgesetzter Bereich bzw. eine Ringnut 18 für eine sichere Aufnahme und Führung der lediglich schematisch angedeuteten Feder 5 dargestellt ist.

Die in den Fig.3 und 4 dargestellte Ringscheibe bzw. Lochscheibe 10, welche das Gleitlager 4 für das freie Ende des nicht näher dargestellten Ventilschaftes 11 trägt, weist ebenfalls eine von einem axialen Fortsatz 19 gebildete Führung für die nicht näher dargestellte Feder 5 auf. Weiters sind vor allem in der Ansicht gemäß Fig.4 die Ausnehmungen bzw. Durchtrittsöffnungen 16 dargestellt.

Für eine ordnungsgemäße Dichtung bei geschlossenem Ventil weist wenigstens eine der Sitzflächen 6 und 9 gekrümmte Erzeugende auf, so daß bei geschlossenem Ventil 2 eine Linienberührung zwischen den Sitzflächen 6 und 9 erfolgt. Nach einem Schließen des Sicherheitsventils wird nach einer darauffolgenden Reparatur des verbraucherseitigen Leitungsnetzes durch ein Einbringen von einem den Gasdruck auf der Zuführungsseite 20 übersteigenden Druck auf der Verbraucherseite 14 das Ventil durch Unterstützung der Federkraft wiederum geöffnet und es kann somit auf ein Ausgraben bzw. Freilegen des zumeist an unzugänglicher Stelle angeordneten Ventiles 2 verzichtet werden.

Wie aus Fig.1 ersichtlich, weist das Leitungsstück 1, in welchem das Ventil angeordnet ist, an seinen Enden schematisch angedeutete Gewinde 21 und 22 auf, welche für ein Verschrauben mit den Anschlußleitungen dienen. Das Sicherheitsventil 2 wird dabei günstigerweise unmittelbar im Bereich des Anschlusses eines Verbrauchernetzes an eine Hauptleitung oder an den Abzweigungen im Hauptnetz angeordnet.

Bei der in Fig.5 dargestellten abgewandelten Ausführungsform des Ventiles 2 ist lediglich der Bereich des Ventiltellers 7 mit dem daran anschließenden Schaft 11 dargestellt. Der Ventilteller weist dabei an der dem Schaft 11 bzw. der nicht dargestellten Feder 5 abgewandten Seite Leitflächen 23 auf, welche konvex gekrümmt ausgebildet sind und etwa die Form einer Haube aufweisen. Derart werden Turbulenzen im Bereich der Sitzfläche 6 des Ventiles 2 vermieden. Für eine weitgehend laminare Strömung sind nicht nur Leitflächen 23 im Bereich der Zuführungsseite vorgesehen, sondern es ist auch der dem Ventilsitz 9 unmittelbar benachbarte Bereich 24 im Anschluß an den Ventilteller 7 mit kontinuierlich abnehmendem Durchmesser ausgebildet, sodaß sich ausgehend vom Ventilsitz 9 ein für eine im wesentlichen wirbelfreie Strömung glatte und kontinuierlich verlaufende Oberfläche ergibt. Weiters ist bei der Ausbildung gemäß Fig.5 eine Leckgasbohrung 25 angedeutet, deren Dimensionierung auf die entsprechenden Sicherheitsbestimmungen abgestimmt ist. Alternativ oder zusätzlich zu dieser Leckgasbohrung 25 kann die Ventilsitzfläche 6 undicht an die nicht näher dargestellte Sitzfläche des Ventilsitzes 9 anpreßbar sein.

In Fig.6 ist eine progressive Federkennlinie für eine Feder 5 zur Beaufschlagung des Tellerventils 2 vorgesehen. Dabei legt der Ventilteller 7 im Falle eines Druckabfalles bei einer Federkraft Fl einen größeren Weg Sl zurück, wodurch der Durchströmquerschnitt im Bereich des Ventiltellers 7 bzw. Ventilsitzes 9 rasch verkleinert wird und damit ein rascheres Ansteigen der Differenzdruck-Schließkraft bewirkt wird und somit insgesamt ein schnelleres und sicheres Ansprechverhalten der Sicherheitsschließvorrichtung ermöglicht wird. Gleichzeitig wird ein mit einer eine derartige Federkennlinie aufweisenden Feder beaufschlagtes Ventil 2 im Betriebszustand in stabiler Lage gehalten.

Die das Ventil aufweisende Sicherheitsschließvorrichtung kann über einen Gewindeanschluß, einen Flanschanschluß oder Schweißverbindungen in die entsprechenden Leitungen eingebaut werden, wobei bei Verwendung von PE-Rohrleitungen ebenfalls Schweißverbindungen vorgesehen sein können.

In den Fig.7 und 8 ist wiederum mit 1 der Rohrabschnitt bzw. das rohrförmige Gehäuse für die Sicherheitsschließvorrichtung bezeichnet. Zur Lagerung des Tellerventils 2, welches in Fig.9 noch näher beschrieben werden wird, sind bei dieser Ausführungsform wiederum Gleitlager 3 und 4 vorgesehen, welche, wie sich dies insbesondere aus der Ansicht gemäß Fig.8 ergibt, über in im wesentlichen radialer Richtung verlaufende Rippen bzw. Stege 26 gehalten werden. Durch die im wesentlichen in radialer Richtung verlaufenden Stege 26 wird die Ausbildung einer laminaren Strömung im Bereich der Sicherheitsschließvorrichtung begünstigt. Bei der in den Fig.7 bis 10 gezeigten Ausführungsform, welche insbesondere in Niederdruckleitungen, d.h. bei Drücken von maximal 1 bar, Verwendung findet, schließen Erzeugende des Bereiches 9 des Ventilsitzes 9 mit einer Parallelen zur Achse 27 des Ventilschaftes 11 sowie des rohrförmigen Abschnittes 1 einen Winkel α ein, welcher bei etwa 45° liegt. Neben der konischen Ausbildung des Ventilsitzes 9 ist im Anschluß an den Ventilsitz 9 an der der Gaszuführungsseite 20 abgewandten Seite die Ausbildung so getroffen, daß die Querschnittsfläche des Durchtrittsquerschnittes im an den Ventilsitz 9 anschließenden Bereich stetig wiederum zunimmt, wobei die Erzeugenden 28 des im wesentlichen konischen Bereiches mit einer zur Achse 27 parallelen Linie einen Winkel β einschließen, welcher im gezeigten Ausführungsbeispiel bei etwa 5° liegt. Durch die stetige Zunahme der an den Ventilsitz 9 anschließenden Querschnittsflächen wird der im Bereich des Ventilsitzes 9 hervorgerufene Druckverlust weitestgehend wiederum ausgeglichen, so daß der Druckunterschied zwischen der Gaszuführungsseite 20 und der Verbraucherseite 14 vernachlässigbar wird. Gemeinsam mit den im wesentlichen radial verlaufenden Stegen 26 wird auch durch diese Maßnahme die Ausbildung einer laminaren Strömung auf der Verbraucherseite 14 unter weitestgehender Vermeidung von Turbulenzen ermöglicht. Durch Verwendung von Stegen 26 zur Abstützung der Gleitlager 3 und 4 kann auf die insbesondere in Fig. 1 dargestellten Ringscheiben 8 und 10 verzichtet werden, welche die Gleitlager 3 und 4 tragen.

Das in Fig.9 dargestellte Tellerventil 2 weist wiederum einen abgesetzten Ventilschaft 11 zur Festlegung einer nicht dargestellten Feder 5 auf, wobei im Bereich des Zusammenwirkens mit dem der Gaszuführungsseite 20 zugewandten Ende des Ventilschaftes 11 dieses an seinem Außenumfang in Längsrichtung desselben verlaufende Rippen 29 aufweist. Durch Verwendung von Rippen 29 ergibt sich insbesondere durch die dazwischen freibleibenden Vertiefungen bzw. Rillen 30 die Möglichkeit, etwaige, im Gas enthaltene Festkörperchen, welche sich im Bereich des Gleitlagers 3 anlegen könnten, wiederum zu entfernen, sodaß ein Festfressen des Tellerventils 2 im Gleitlager 3 vermieden wird.

Anstelle der Ausbildung von Rippen 29 im Bereich des Gleitlagers 3 kann die Ausbildung alternativ auch so getroffen sein, daß das Gleitlager 3 selbst von den freien Stirnflächen der Stege 26 gebildet wird, welche sich unmittelbar an dem Außenumfang des Ventilschaftes 11 abstützen. Der Ventilteller 31 des Tellerventils 2 ist an der der Gaszuführung 20 zugewandten Seite ähnlich der Ausbildung gemäß Fig.1 abgeschrägt ausgebildet.

Bei der Darstellung gemäß Fig.11 sind die Bezugszeichen der ähnlich ausgebildeten Ausführungsform gemäß Fig.7 für gleiche Bauteile beibehalten worden. Auch bei dieser Ausführungsform werden die Gleitlager 3 und 4 über im wesentlichen radial verlaufende Stege 26 abgestützt. Zur Vermeidung eines merkbaren Druckverlustes im Bereich des Ventiles 2 ist auch bei dieser Ausführungsform die Ausbildung so getroffen, daß im Bereich nach dem Ventilsitz 9 die Querschnittsfläche stetig zunimmt, wie dies durch den Winkel β zwischen der Achse 27 und den Begrenzungsflächen 28 wiederum angedeutet ist. Weiters ist im Bereich des Ventilsitzes vorgesehen, daß die Erzeugenden des Bereiches 9 mit einer Parallelen zur Achse 27 wiederum einen Winkel *α* einschließen, welcher bei der gezeigten Ausführungsform, welche insbesondere für Mitteldruckleitungen, d.h. für Drücke zwischen 1 und 4 bar, Verwendung finden soll, bei etwa 30° liegt. Das für einen Einsatz bei der Ausführungsform gemäß Fig.11 verwendbare Tellerventil 2, welches in Fig.12 dargestellt ist, weist am Außenumfang des Ventilschaftes 11 im Bereich des Zusammenwirkens mit dem Gleitlager 3 wiederum im wesentlichen radiale Rippen 29 und dazwischenliegende Rillen bzw. Vertiefungen 30 auf. Der Ventilteller 31 ist bei dieser Ausbildung an der der Gaszuführung 20 zugewandten Seite abgesetzt ausgebildet, wie dies durch 32 angedeutet ist, und dient beispielsweise der Aufnahme einer aufsteckbaren Strömungsleiteinrichtung.

Neben der Ausbildung von Rippen 29 am Außenumfang des Ventilschaftes 11 bzw. der Abstützung des Ventilschaftes über im wesentlichen radial verlaufende Stege 26 bzw. Rippen 26 zur Vermeidung eines Festfressens der Sicherheitsschließvorrichtung bei Auftreten von im Gas mitgeführten Feststoffteilchen ist als zusätzlicher Schutz unmittelbar vor dem Ventilsitz 9 bzw. dem Tellerventil 2 im Bereich der Gaszuführung 20 ein Filter 33 angeordnet, wie dies in Fig.11 angedeutet ist.

Bei der Ausbildung gemäß Fig.13 ist der Schaft 11 des Ventils wiederum von Stegen 26 abgestützt, welche mit schematisch angedeuteten Schneiden 34 ausgebildet sind, welche das der Gaszuleitung zugewandte Gleitlager 3 definieren. Der Ventilschaft 11 ist bei dieser Ausführungsform hohl ausgebildet und es wird die Feder 5 in einer Ausnehmung 35 des Ventilschaftes 11 aufgenommen. Die Feder 5 wirkt dabei mit einem an einem Bolzen 36, insbesondere verstellbar, ausgebildeten Federteller 37 zusammen, wobei der Bolzen 36 in einer Lagerung am der Gaszuführungsseite abgewandten Ende der Stege 26 gelagert ist. Der Federteller 37 bildet gemeinsam mit einem Abschlußstück des hohlen Ventilschaftes 11 das zweite Gleitlager 38 für den Ventilschaft 11. Bei der gezeigten Ausführungsform ist zwischen dem hohlen Ventilschaft 11 und dem Lager 38 eine flexible Abdeckung 39 vorgesehen. Über einen im wesentlichen axialen Kanal 40 und einen radialen, daran anschließenden Kanal 41 steht der von der Ausnehmung 35, welche die Feder 5 aufnimmt, definierte Raum mit dem von der Abdeckung 39 definierten Raum und über weitere Bohrungen 42 im Lager 38 mit dem Innenraum im Rohr 1 in Verbindung. Durch eine entsprechende Bemessung der Kanäle und insbesondere der Durchtrittsöffnungen 42 kann zusätzlich zur Federkraft ein Gaspolster im Raum 35 aufgebaut werden, welcher bei einer Verschiebung des Ventils 2 die Wirkung der Feder 5 unterstützt. Anstelle von Kanälen 40 und 41 und Öffnungen 42 kann der Bolzen 36 bzw. der Federteller 37 auch undicht im hohlen Ventilschaft 11 geführt sein und derart eine definierte Drosselstelle ausbilden, welche den gewünschten zusätzlichen Effekt zur Unterstützung der Federkraft mit sich bringt.

Da es zur Vermeidung von Turbulenzen im unmittelbar an den Ventilteller 7 anschließenden Bereich genügt, daß die erforderliche Mindestgeschwindigkeit des Gases lediglich über eine kurze Wegstrecke eingehalten wird, ist bei der in Fig.13 gezeigten Ausbildung ein an den Ventilsitz 9 des Ventiltellers 7 anschließender, abgesetzter Bereich 43 vorgesehen, welcher einen im Querschnitt sich konisch erweiternden Druchtrittsquerschnitt definiert. Dadurch kann der durch die Drosselstelle im Bereich des Ventilsitzes 9 hervorgerufene Druckverlust verringert werden. Eine weitere Verringerung des Druckverlustes erfolgt auch bei dieser Ausführungsform durch die sich konisch erweiternden Begrenzungswände 28 im Bereich der von den Stegen 26 gebildeten Lager für das Ventil 2 bzw. den mit dem Ventil 2 zusammenwirkenden Bolzen 36, welcher den Federteller 37 trägt.

## Patentansprüche

1. Sicherheitsschließvorrichtung für Gasrohrleitungen mit einem Ventil (2), welches gegen einen Ventilsitz in einem insbesondere rohrförmigen Gehäuse (1) preßbar ist, wobei das Ventil (2) als in Achsrichtung des rohrförmigen Gehäuses (1) verschiebliches Tellerventil (2) entgegen der Kraft einer Feder (5) verschieblich gelagert ist, wobei die Querschnittsfläche des Ventiltellers (7) kleiner als der lichte Querschnitt des Gehäuses (1) ausgebildet ist und in Abstand von der Innenwand des rohrförmigen Gehäuses (1) gehalten ist und an der der Feder (5) abgewandten Seite des Ventiltellers (7) der Gaszuleitungsanschluß (20) vorgesehen ist, dadurch gekennzeichnet, daß die Querschnittsfläche des Durchtrittsquerschnittes im an den Ventilsitz (9) anschließenden Bereich stetig zunimmt.

2. Sicherheitsschließvorrichtung nach Anspruch 1, dadurch gekennzeichnet, daß die Erzeugenden (28) des sich konisch erweiternden Bereiches mit der Achse (27) einen Winkel (β) von 3° bis 10°, vorzugsweise 5°, einschließen.

3. Sicherheitsschließvorrichtung nach Anspruch 1 oder 2, dadurch gekennzeichnet, daß an die Sitzflächen (6) des Ventiltellers (7) an der der Gaszuleitung (20) abgewandten Seite ein einen sich konisch erweiternden Querschnitt definierender abgesetzter Bereich (43) am Ventilteller (7) anschließt.

4. Sicherheitsschließvorrichtung nach Anspruch 1, 2 oder 3, dadurch gekennzeichnet, daß der Ventilsitz (9) als Ringscheibe (8) mit annähernd konischen Sitzflächen ausgebildet ist und daß mit der Ringscheibe (8) ein zentrales Gleitlager (3) für den Ventilschaft (11) unter Freilassen eines Gasdurchtrittsquerschnittes verbunden ist.

5. Sicherheitsschließvorrichtung nach einem der Ansprüche 1 bis 4, dadurch gekennzeichnet, daß der Ventilsitz (9) und/oder die mit dem Ventilsitz (9) zusammenwirkende Sitzfläche (6) des Ventiltellers (7) gekrümmte Erzeugende aufweist.

6. Sicherheitsschließvorrichtung nach einem der Ansprüche 1 bis 5, dadurch gekennzeichnet, daß die Federkraft der Feder (5) und/oder der Schließweg des Ventils (2) einstellbar ist.

7. Sicherheitsschließvorrichtung nach einem der Ansprüche 1 bis 6, dadurch gekennzeichnet, daß die Feder (5) zur Beaufschlagung des Ventiltellers (7) mit einer progressiver Federkennlinie ausgebildet ist.

8. Sicherheitsschließvorrichtung nach einem der Ansprüche 1 bis 7, dadurch gekennzeichnet, daß die der Feder (5) abgewandte Stirnfläche des Ventiltellers (7) Leitflächen (23), insbesondere konvex gekrümmte Leitflächen, aufweist (Fig.5).

9. Sicherheitsschließvorrichtung nach einem der Ansprüche 1 bis 8, dadurch gekennzeichnet, daß der dem Ventilsitz benachbarte Bereich (21) des Ventilschaftes (11) unmittelbar an den Ventilsitzflächen (6) des Ventiltellers (7) ansetzt und kontinuierlich zum Ventilschaftdurchmesser abnimmt.

10. Sicherheitsschließvorrichtung nach einem der Ansprüche 1 bis 9, dadurch gekennzeichnet, daß der Ventilteller (7) eine Leckgasbohrung (25) aufweist und/oder die Sitzfläche (6) undicht an den Ventilsitz (9) anpreßbar ist, wobei die Leckgasmenge kleiner als 30 l/h gehalten ist.

11. Sicherheitsschließvorrichtung nach einem der Ansprüche 1 bis 10, dadurch gekennzeichnet, daß der Ventilschaft (11) in Längsrichtung desselben verlaufende Rippen bzw. Rillen (29,30) aufweist.

12. Sicherheitsschließvorrichtung nach einem der Ansprüche 1 bis 11, dadurch gekennzeichnet, daß das bzw. die Gleitlager (3,4) für den Ventilschaft (11) von, vorzugsweise drei, radialen Stegen (26) gebildet ist, welche Stege (26) sich in axialer Richtung des Ventilschaftes (11) erstrecken.

13. Sicherheitsschließvorrichtung nach einem der Ansprüche 1 bis 12, dadurch gekennzeichnet, daß der Winkel (α), den die Erzeugenden der konischen Sitzflächen (6) des Ventilsitzes (9) mit der Achse (27) einschließen, umgekehrt proportional dem Druck in der Gaszuleitung (20) gewählt ist.

14. Sicherheitsschließvorrichtung nach einem der Ansprüche 1 bis 13, dadurch gekennzeichnet, daß an der dem Gaszuleitungsanschluß (20) zugewandten Seite des Ventiltellers (7) ein Filter (33) angeordnet ist (Fig.11).

15. Sicherheitsschließvorrichtung nach einem der Ansprüche 1 bis 14, dadurch gekennzeichnet, daß die Feder (5) in einer Ausnehmung (35) im Ventilschaft (11) angeordnet ist und daß das der Gaszuleitung (20) abgewandte Gleitlager (4) von einem an einem Bolzen (36) angeordneten und in den hohlen Ventilschaft (11) eindringenden Federteller (37) gebildet ist (Fig.13).

16. Sicherheitsschließvorrichtung nach Anspruch 15, dadurch gekennzeichnet, daß der in den hohlen Ventilschaft (11) eintauchende Federteller (37) und/oder Bolzen (36) eine Drosselstelle zwischen der die Feder (5) aufnehmenden Ausnehmung (35) des Ventilschaftes (11) und der Rohrleitung (1) aufweist.

## Claims

1. A safety shut-off device for gas pipelines comprising a valve (2) capable of being pressed against a valve seat provided in a particularly tubular housing (1), wherein the valve (2) as a disc valve (2) displaceable in the axial direction of the tubular housing (1) is mounted so as to be displaceable against the resilience of a spring (5), wherein the cross sectional area of the valve disc (7) is smaller than the clear cross section of the housing (1) and held at a distance from the inner wall of the tubular housing (1), and wherein the gas supply connection (20) is provided on the side of the valve disc (7) facing away from the spring (5), characterized in that the cross sectional area of the passage cross section continuously increases in the region following the valve seat (9).

2. A safety shut-off device according to claim 1, characterized in that the generatrices (28) of the conically widening region enclose an angle (β) of between 3° and 10°, preferably 5°, with the axis (27).

3. A safety shut-off device according to claim 1 or 2, characterized in that an offset region (43) provided on the valve disc (7) and defining a conically widening cross section adjoins the seating surfaces (6) of the valve disc (7) on the side facing away from the gas supply duct (20).

4. A safety shut-off device according to claim 1, 2 or 3, characterized in that the valve seat (9) is designed as an annular disc (8) having approximately conical seating surfaces and that a central slide bearing (3) for the valve stem (11) is connected with the annular disc (8) while leaving open a gas passage cross section.

5. A safety shut-off device according to any one of claims 1 to 4, characterized in that the valve seat (9) and/or the seating surface (6) of the valve disc (7), that cooperates with the valve seat (9) has/have curved generatrices.

6. A safety shut-off device according to any one of claims 1 to 5, characterized in that the resilience of the spring (5) and/or the closing distance of the valve (2) is/are adjustable.

7. A safety shut-off device according to any one of claims 1 to 6, characterized in that the spring (5) intended to act on the valve disc (7) is formed with a progressive spring characteristic.

8. A safety shut-off device according to any one of claims 1 to 7, characterized in that the end face of the valve disc (7), that faces away from the spring (5) comprises guide faces (23), in particular convexly curved guide faces (Fig. 5).

9. A safety shut-off device according to any one of claims 1 to 8, characterized in that the region (21) of the valve stem (11) adjacent to the valve seat directly joins the valve seating surfaces (6) of the valve disc (7), continuously decreasing to the diameter of the valve stem.

10. A safety shut-off device according to any one of claims 1 to 9, characterized in that the valve disc (7) comprises a leakage gas bore (25) and/or the seating surface (6) is capable of being pressed at the valve seat (9) in an untight manner, the amount of leakage gas being maintained under 30 l/h.

11. A safety shut-off device according to any one of claims 1 to 10, characterized in that the valve stem (11) comprises ribs or grooves (29, 30) extending in the longitudinal direction of the same.

12. A safety shut-off device according to any one of claims 1 to 11, characterized in that the slide bearing(s) (3, 4) for the valve stem (11) is/are formed by, preferably three, radial webs (26), said webs (26) extending in the axial direction of the valve stem (11).

13. A safety shut-off device according to any one of claims 1 to 12, characterized in that the angle (α) enclosed by the generatrices of the conical seating surfaces (6) of the valve seat (9) with the axis (27) is inversely proportional to the pressure in the gas supply duct (20).

14. A safety shut-off device according to any one of claims 1 to 13, characterized in that a filter (33) is arranged on the side of the valve disc (7), that faces the gas supply connection (20) (Fig. 11).

15. A safety shut-off device according to any one of claims 1 to 14, characterized in that the spring (5) is arranged in a recess (35) provided in the valve stem (11) and that the slide bearing (4) facing away from the gas supply duct (20) is comprised of a spring plate (37) arranged on a pin (36) and penetrating into the hollow valve stem (11) (Fig. 13).

16. A safety shut-off device according to claim 15, characterized in that the spring plate (37) penetrating into the hollow valve shaft (11) and/or the pin (36) comprise(s) a constriction between the recess (35) of the valve stem (11) accommodating the spring (5) and the pipeline (1).

## Revendications

1. Dispositif de fermeture de sécurité pour conduites tubulaires de gaz, comprenant une soupape (2) qui peut être pressée contre un siège de soupape dans un corps (1), notamment tubulaire, la soupape (2) étant montée mobile en translation à l'encontre de la force d'un ressort (5), sous la forme d'une soupape à plateau (2) mobile en translation dans la direction axiale du corps tubulaire (1), la surface de section du plateau de soupape (7) étant plus petite que la section libre du corps (1) et étant maintenue à distance de la paroi intérieure du corps tubulaire (1) et le raccord (20) de la conduite de gaz étant prévu sur le côté du plateau de soupape (7) qui est éloigné du ressort (5), caractérisé en ce que la surface de section de la section de passage croît continuellement dans la région qui fait suite au siège de soupape (9).

2. Dispositif de fermeture de sécurité selon la revendication 1, caractérisé en ce que les génératrices (28) de la région qui s'élargit en cône forment avec l'axe (27) un angle (β) de 3° à 10°, de préférence égal à 5°.

3. Dispositif de fermeture de sécurité selon la revendication 1 ou 2, caractérisé en ce qu'aux surfaces de portée (6) du plateau de soupape (7), sur le côté qui est éloigné de l'arrivée de gaz (20), fait suite une région détalonnée (43) du plateau de soupape (7), qui définit une section transversale s'élargissant en cône.

4. Dispositif de fermeture de sécurité selon la revendication 1, 2 ou 3, caractérisé en ce que le siège de soupape (9) est constitué par une rondelle annulaire (8) présentant des surfaces de portée approximativement coniques, et en ce qu'un guide coulissant central (3) de la tige (11) de la soupape est reliée à la rondelle annulaire (8) en ménageant une section de passage du gaz.

5. Dispositif de fermeture de sécurité selon une des revendications 1 à 4, caractérisé en ce que le siège de soupape (9) et/ou la surface de portée (6) du plateau de soupape (7) qui coopère avec le siège de soupape (9) présentent des génératrices courbes.

6. Dispositif de fermeture de sécurité selon une des revendications 1 à 5, caractérisé en ce que la force élastique du ressort (5) et/ou la course de fermeture de la soupape (2) sont réglables.

7. Dispositif de fermeture de sécurité selon une des revendications 1 à 6, caractérisé en ce que le ressort (5) destiné à solliciter le plateau de soupape (7) possède une caractéristique élastique progressive.

8. Dispositif de fermeture de sécurité selon une des revendications 1 à 7, caractérisé en ce que la surface frontale du plateau de soupape (7) qui est à l'opposé du ressort (5) présente des surfaces déflectrices (23), en particulier des surfaces déflectrices incurvées avec une forme convexe (figure 5).

9. Dispositif de fermeture de sécurité selon une des revendications 1 à 8, caractérisé en ce que la région (21) de la tige (11) de la soupape qui est voisine du siège de la soupape se raccorde directement aux surfaces de portée (6) du plateau de soupape (7) et s'amincit continuellement pour atteindre le diamètre de la tige de la soupape.

10. Dispositif de fermeture de sécurité selon une des revendications 1 à 9, caractérisé en ce que le plateau de soupape (7) présente un perçage (25) de fuite de gaz et/ou la surface de portée (6) peut être appliquée sur le siège (9) de soupape (7) à joint non étanche, le débit de fuite de gaz étant inférieur à 30 l/h.

11. Dispositif de fermeture de sécurité selon une des revendications 1 à 10, caractérisé en ce que la tige (11) de la soupape présente des nervures ou des sillons (29, 30) qui s'étendent dans sa direction longitudinale.

12. Dispositif de fermeture de sécurité selon une des revendications 1 à 11, caractérisé en ce que le ou les guides coulissants (3, 4) de la tige (11) de la soupape est ou sont constitués par des voiles radiaux (26), de préférence au nombre de trois, lesquels voiles (26) s'étendent dans la direction axiale de la tige (11) de la soupape.

13. Dispositif de fermeture de sécurité selon une des revendications 1 à 12, caractérisé en ce que l'angle (α) que les génératrices des surfaces de portée conique (6) du siège (9) de la soupape forment avec l'axe (27) est choisi inversement proportionnel à la pression régnant dans l'arrivée de gaz (20).

14. Dispositif de fermeture de sécurité selon une des revendications 1 à 13, caractérisé en ce qu'un filtre (33) est disposé sur le côté du plateau (7) de la soupape qui est dirigé vers le raccord (20) de l'arrivée de gaz (figure 11).

15. Dispositif de fermeture de sécurité selon une des revendications 1 à 14, caractérisé en ce que le ressort (5) est disposé dans un évidement (35) ménagé dans la tige (11) de la soupape et en ce que le guide coulissant (4) qui est à l'opposé de l'arrivée de gaz (20) est formé par un plateau de ressort (37) monté sur une broche (36) et qui pénètre dans la tige creuse (11) de la soupape (figure 13).

16. Dispositif de fermeture de sécurité selon la revendication 15, caractérisé en ce que le plateau de ressort (37) qui plonge dans la tige creuse (11) de la soupape et/ou la broche (36) présentent un étranglement entre l'évidement (35) de la tige (11) de la soupape qui reçoit le ressort (5) et la conduite tubulaire (1).
